# FASCICULE DE BREVET EUROPEEN

(11) **EP 3 113 056 B1**
(45) Date de publication et mention de la délivrance du brevet: **23.01.2019**
(21) Numéro de dépôt: 16177228.0
(22) Date de dépôt: 30.06.2016
(51) Int. Cl.: G06F 21/55, G06F 21/62, G06Q 20/20, G06Q 20/34, G06F 21/31, G06F 21/85

(54) **SÉCURISATION D'UNE VALIDATION D'UNE SÉQUENCE DE CARACTÈRES, PROCÉDÉ, DISPOSITIF ET PRODUIT PROGRAMME D'ORDINATEUR CORRESPONDANTS**
SICHERUNG FÜR DIE VALIDIERUNG EINER ZEICHENFOLGE, ENTSPRECHENDES VERFAHREN, ENTSPRECHENDE VORRICHTUNG UND ENTSPRECHENDES COMPUTERPROGRAMMPRODUKT
SECURING A VALIDATION OF A CHARACTER SEQUENCE, CORRESPONDING METHOD, DEVICE AND COMPUTER PROGRAM PRODUCT

(30) Priorité: 03.07.2015 FR 1556352
(43) Date de publication de la demande: 04.01.2017
(73) Titulaire: Ingenico Group, 75015 Paris (FR)
(72) Inventeur: GERAUD, Rémi, 92160 Antony (FR); KOUDOUSSI, Hiba, 75012 Paris (FR); NACCACHE, David, 75018 Paris (FR)
(74) Mandataire: Vidon Brevets & Stratégie

(56) Documents cités:
- EP-A2- 1 788 507
- FR-A1- 2 852 717
- US-A- 5 805 064
- US-A1- 2014 327 629

## Description

### 1. Domaine

Le domaine de l'invention est celui des dispositifs électroniques de saisie de données utilisés pour effectuer des opérations qui font intervenir ou portent sur des objets de nature confidentielle. A titre illustratif, on peut citer les opérations de paiement qui font intervenir un numéro de carte bancaire ou qui portent sur une saisie de code confidentiel associé à une carte de paiement. D'autres opérations telles que par exemple des opérations d'ordre médical ou civil, qui portent sur des données biologiques ou patrimoniales propres à un individu, sont également concernées par la présente technique.

### 2. Art antérieur

Certains dispositifs électroniques de saisie de données, comme les terminaux de paiement par exemple, sont spécifiquement conçus, tant sur le plan matériel que logiciel, pour offrir une protection la plus optimale possible des données confidentielles qui sont susceptibles d'y être saisies. Cette protection contre des intrusions ou des attaques peut être réalisée à plusieurs niveaux. Au niveau de la constitution physique du dispositif électronique de saisie de données, son armature peut par exemple consister en un boîtier inviolable, résistant à l'intrusion (« tamper resistant » en anglais), ou laissant trace visible de toute tentative de sabotage (« tamper evident » en anglais), ou encore apportant une réponse adaptée à une détection d'intrusion (« tamper responsive » en anglais). L'utilisation de circuits électroniques gravés dans la masse ou multi couches permet également d'offrir une sécurisation renforcée du dispositif, en complexifiant grandement la tache de personnes malveillantes qui chercheraient à intercepter des données confidentielles au moyen de sondes placées sur certaines connexions du dispositif. Au niveau de la constitution fonctionnelle du dispositif, les données sensibles sont généralement chiffrées et leur traitement est soumis à des protocoles cryptographiques. Enfin, au niveau logiciel, on préfère habituellement utiliser des composantes aptes à être mises en oeuvre uniquement au sein de processeurs sécurisés inaccessibles à des tiers.

Une contrepartie de ce niveau de sécurisation important est que la souplesse d'utilisation offerte par de tels dispositifs reste limitée. Faire certifier une application afin qu'elle puisse être autorisée à être exécutée au niveau du processeur sécurisé du dispositif est souvent long et contraignant. Dans un monde riche en équipements électroniques divers tels que téléphones mobiles, assistants personnels ou micro-ordinateurs, un besoin de souplesse comparable se fait sentir pour les dispositifs de saisie de données destinés à être utilisés pour effectuer des opérations qui font intervenir ou portent sur des objets de nature confidentielle, également appelés dispositifs sécurisés. On sait que les systèmes d'exploitation communément dits ouverts offrent une abondance d'applications utiles et conviviales qu'il est intéressant de pouvoir mettre en oeuvre pour satisfaire ce besoin de souplesse sur les dispositifs sécurisés. Aussi, de plus en plus de dispositifs électroniques de saisie de données sécurisés comprennent, en plus du processeur sécurisé, un processeur non sécurisé apte à exécuter des applications tierces, par exemple téléchargeables sur une plate-forme de distribution mise à disposition par le fabricant du dispositif. Le document EP1788507 décrit par exemple un dispositif sécurisé du type terminal de paiement qui comprend deux environnements d'exécution, un environnement d'exécution sécurisé pour l'exécution des applications sécurisées et un environnement d'exécution non sécurisé pour l'exécution des applications non sécurisées, chaque environnement disposant de son propre processeur. Cette ouverture à d'autres applications logicielles que celles rigoureusement sécurisées a pour inconvénient de mettre potentiellement en péril la sécurité des données saisies sur le dispositif sécurisé. Ainsi une application malveillante (ou polluée par des séquences d'exécution malveillantes), pourrait espionner et trahir des processus sécuritaires de l'équipement, dans le but de récupérer des informations confidentielles. Une application malveillante pourrait également imiter l'apparence d'une application légitime (par exemple une application de paiement) afin de tromper un utilisateur et ainsi récupérer ses informations confidentielles.

Alors que le grand public commence à être sensibilisé vis-à-vis de l'existence de ces techniques frauduleuses sur des terminaux de communication personnels (tablettes, smartphone, micro-ordinateurs, etc.), il n'a pas nécessairement le même niveau de vigilance vis-à-vis de dispositifs plus spécialisés (tels que les terminaux de paiement) qui font pourtant partie intégrante de son quotidien, mais qu'il suppose être sécurisés de par la nature des opérations qui y sont couramment traitées. Aussi a-t-il tendance à leur accorder plus naturellement sa confiance, alors même que le risque de se faire voler des données confidentielles y demeure présent.

Il existe donc un besoin de proposer des dispositifs électroniques de saisie de données qui comprennent des moyens permettant d'éviter ou de ralentir des tentatives de récupération frauduleuse de données confidentielles.

### 3. Résumé

L'invention propose un procédé de sécurisation, un dispositif électronique de saisie de données et un produit programme ordinateur téléchargeable tels que définis dans le revendications.

La technique proposée offre une solution qui ne présente pas au moins certains de ces problèmes de l'art antérieur, grâce à un procédé original de sécurisation d'une validation d'une séquence de caractères saisie par un utilisateur sur un dispositif électronique de saisie de données comprenant un processeur non sécurisé et un processeur sécurisé. Selon un premier aspect de la technique proposée, ce procédé est mis en oeuvre au sein du processeur sécurisé, et il comprend une étape de détermination d'un traitement à appliquer à la séquence de caractères saisie, en fonction d'un signal représentatif d'une validation, par l'utilisateur, de cette séquence de caractères. Le signal représentatif d'une validation est délivré par un moyen de validation appartenant à un ensemble comprenant au moins deux moyens de validation distincts, disponibles sur le dispositif électronique de saisie de données.

Ainsi la technique proposée permet de différencier, au niveau d'un processeur sécurisé d'un dispositif électronique de saisie de données, les traitements à appliquer à une séquence de caractères saisie par un utilisateur sur ce dispositif, en fonction d'un moyen de validation dudit dispositif utilisé par l'utilisateur pour valider cette séquence de caractères saisie. De cette manière, il est notamment possible d'assigner plus particulièrement un premier moyen de validation (dit moyen de validation sécurisée) dudit dispositif à la validation d'informations considérées comme sensibles (la validation d'un code confidentiel associé à une carte de paiement par exemple), et un deuxième moyen de validation (dit moyen de validation non sécurisée), différent du premier, à la validation d'informations considérées comme peu ou pas sensibles (la validation d'un montant à payer par exemple).

Dans un mode de réalisation particulier de la technique proposée, l'étape de détermination d'un traitement à appliquer à la séquence de caractères comprend :
- une étape d'obtention du signal représentatif d'une validation de ladite séquence de caractères;
- une étape d'obtention, au sein d'une mémoire sécurisée, de ladite séquence de caractères ;
- lorsque le signal est représentatif d'une validation non sécurisée :
   - une étape de transmission de ladite séquence de caractères vers une application courante ;
   - une étape de suppression, de ladite mémoire sécurisée, de ladite séquence de caractères.

De cette manière, une séquence de caractères dont la saisie est validée avec le moyen de validation non sécurisée est systématiquement transmise à l'application courante en cours d'exécution sur le dispositif électronique de saisie de données, sans autre forme de vérification. L'application courante correspond généralement à l'application en cours d'exécution sur le dispositif électronique de saisie de données, et dont l'interface graphique est affichée sur un écran dudit dispositif au moment de la validation de la séquence de caractères préalablement saisie. Elle peut être exécutée par le processeur sécurisé ou par le processeur non sécurisé, et elle est le plus souvent l'application à l'origine de la demande de saisie d'informations, formulée à destination de l'utilisateur (au moyen par exemple d'un message, affiché sur un écran du dispositif, et invitant l'utilisateur à saisir une information d'une nature donnée), qui a entraîné la saisie et la validation de ladite séquence de caractères.

Dans un mode de réalisation particulier de la technique proposée, l'étape de détermination d'un traitement à appliquer à la séquence de caractères comprend en outre, lorsque le signal est représentatif d'une validation sécurisée :
- une étape de comparaison de l'application courante avec une liste d'applications prédéterminée ;
   - lorsque ladite application courante est présente dans la liste d'applications prédéterminée :
      - une étape de transmission de ladite séquence de caractères vers ladite application courante ;
      - une étape de suppression, de ladite mémoire sécurisée, de ladite séquence de caractères ;
   - lorsque ladite application courante est absente de la liste d'applications prédéterminée, une étape de suppression, de ladite mémoire sécurisée, de ladite séquence de caractères.

De cette manière, lorsque le moyen de validation sécurisée est utilisé pour valider la saisie d'une séquence de caractères, le processeur sécurisé effectue une vérification complémentaire pour déterminer le traitement à appliquer à cette séquence de caractères. S'il apparaît que l'application courante n'appartient pas à une liste d'applications prédéterminée - en d'autres termes s'il n'apparaît pas légitime que l'application courante nécessite l'emploi d'une validation sécurisée pour les informations qui y sont saisies - la séquence de caractères saisie par l'utilisateur est purement et simplement défaussée (c'est à dire supprimée de la mémoire sécurisée associée au processeur sécurisé). Elle n'est donc pas transmise à l'application courante (soit parce cette application est suspecte, soit parce que l'utilisateur a par inadvertance utilisé le moyen de validation sécurisée pour valider sa saisie, en lieu et place du moyen de validation non sécurisée qui aurait dû être employé au regard de la nature de l'application courante), et les données saisies, potentiellement confidentielles, ne sont pas compromises. A l'inverse, s'il apparaît légitime d'employer le moyen de validation sécurisé au regard de l'application courante (cette dernière fait effectivement partie de la liste d'applications prédéterminée), alors la séquence de caractères saisie est transmise à cette application courante.

Dans un autre mode de réalisation particulier de la technique proposée, le procédé de sécurisation comprend en outre, lorsque l'application courante est absente de la liste d'applications prédéterminée, une étape d'affichage, sur un écran du dispositif électronique de saisie de données, d'une donnée représentative de la suppression sans transmission de ladite séquence de caractères.

De cette manière, l'utilisateur peut être averti, par exemple au moyen d'un message affiché sur l'écran du dispositif électronique de saisie de données, que la séquence de caractères saisie a été supprimée sans être transmise à l'application courante, et en expliquer les raisons.

Dans encore un autre mode de réalisation particulier de la technique proposée, la longueur de la séquence de caractères obtenue au sein de la mémoire sécurisée est prédéfinie.

Ainsi, la longueur de la séquence de caractères mémorisée au sein de la mémoire sécurisée associé au processeur sécurisé peut être adaptée en fonction des caractéristiques des données confidentielles à même d'être saisies sur le type de dispositif considéré. Par exemple, sur un terminal de paiement, une information confidentielle couramment saisie est le code d'identification personnel (code PIN) à quatre chiffres associé à une carte de paiement. En limitant alors aux quatre derniers caractères saisis la longueur de la séquence de caractères mémorisée dans la mémoire sécurisée, on assure de sécuriser un éventuel code d'identification personnel saisi tout en ne bloquant pas complètement l'application courante dans son fonctionnement courant tant qu'une validation n'est pas effectuée (les caractères qui ne font pas partie des quatre derniers saisis étant transmis à l'application courante, au fur et à mesure des nouveaux caractères saisis par l'utilisateur). Cette limitation du nombre de caractères stocké dans la mémoire sécurisée permet également de se prémunir de potentielles attaques sur le processeur sécurisé : ainsi, une personne malveillante ne pourra par exemple pas compromettre le processeur sécurisé, en saisissant un nombre très important de caractères sans jamais opérer de validation.

Dans un autre mode de réalisation particulier de la technique proposée, la séquence de caractères est supprimée de la mémoire sécurisée du dispositif électronique de saisie de données si aucune nouvelle saisie de caractère n'est effectuée sur le dispositif pendant un temps prédéterminé.

Ainsi, le temps de rétention de données potentiellement confidentielles au sein du dispositif électronique de saisie de données est limité : sans action de l'utilisateur au bout d'un temps imparti, ces données sont notamment supprimées de la mémoire sécurisée associée au processeur sécurisé. Ceci constitue une mesure de sécurisation supplémentaire, car les données saisies par un utilisateur sur le dispositif électronique de saisie de données, même non validées, ne sont conservées que temporairement au sein de ce dispositif.

Dans un mode de réalisation particulier de la technique proposée, le dispositif électronique de saisie de données est un terminal de paiement.

Selon un autre aspect, la technique proposée se rapporte également à un dispositif électronique de saisie de données qui comprend un processeur non sécurisé et un processeur sécurisé, et qui comprend des moyens de sécurisation d'une validation d'une séquence de caractères saisie par un utilisateur. Un tel dispositif électronique de saisie de données comprend :
- un ensemble comprenant au moins deux moyens de validation distincts ;
- des moyens de détermination, par ledit processeur sécurisé, d'un traitement à appliquer à ladite séquence de caractères, en fonction d'un signal représentatif d'un moyen de validation, utilisé par ledit utilisateur pour valider ladite séquence de caractères, ledit signal représentatif d'une validation étant délivré par un des moyens de validation appartenant audit ensemble comprenant au moins deux moyens de validation distincts.

Selon une implémentation préférée, les différentes étapes du procédé de sécurisation selon la technique proposée sont mises en oeuvre par un ou plusieurs logiciels ou programmes d'ordinateur, comprenant des instructions logicielles destinées à être exécutées par un processeur de données selon la technique proposée et étant conçu pour commander l'exécution des différentes étapes des procédés.

En conséquence, la technique proposée vise aussi un programme, susceptible d'être exécuté par un ordinateur ou par un processeur de données, et en particulier un processeur sécurisé, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 décrit un exemple de dispositif électronique de saisie de données tel qu'il en existe dans l'art antérieur ;
- la figure 2 présente un dispositif électronique de saisie de données, sur lequel la saisie d'informations est effectuée au moyen de boutons physiques, dans un mode de réalisation particulier de la technique proposée ;
- la figure 3 présente un dispositif électronique de saisie de données, sur lequel la saisie d'informations est effectuée au moyen de boutons virtuels affichés sur un écran tactile, dans un mode de réalisation particulier de la technique proposée ;
- la figure 4 décrit une architecture simplifiée d'un environnement d'exécution sécurisé comprenant un processeur sécurisé, au sein duquel le procédé de sécurisation d'une validation d'une séquence de caractères peut être mis en oeuvre, selon un mode de réalisation particulier de la technique proposée ;
- la figure 5 illustre les étapes mises en oeuvre au niveau d'un processeur sécurisé d'un dispositif électronique de saisie de données, pour la réalisation du procédé de sécurisation d'une validation d'une séquence de caractères, selon un mode de réalisation particulier de la technique proposée ;
- la figure 6 présente un exemple de séquence de caractères stockée au sein d'une mémoire sécurisée associée au processeur sécurisé, au fur et à fur des saisie effectuées par un utilisateur sur le clavier d'un dispositif électronique de saisie de données, selon un mode de réalisation particulier de la technique proposée.

### 5. Description détaillée

### 5.1 Contexte général

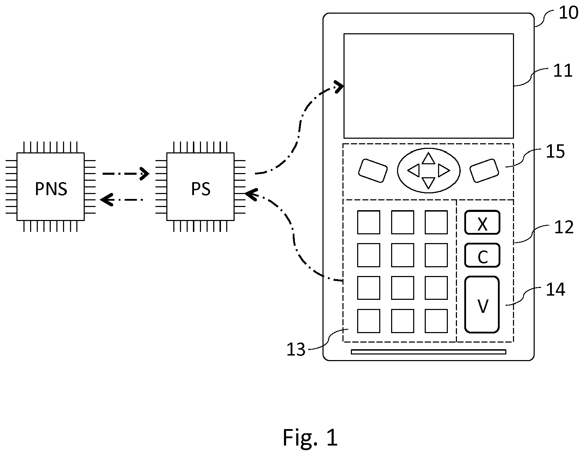

La technique proposée s'applique plus particulièrement aux dispositifs électroniques de saisie de données qui comprennent deux processeurs, un processeur sécurisé, et un processeur non sécurisé. Le processeur sécurisé a accès à une mémoire sécurisée, et l'association de ces deux éléments forme donc un environnement d'exécution sécurisé au sein du dispositif. Par environnement d'exécution sécurisé, on entend une sécurisation qui peut être aussi bien matérielle que logicielle, avec notamment la mise en oeuvre des différentes techniques de protection présentées en relation avec l'art antérieur (constitution physique du boitier de protection des composants sécurisés, circuits électroniques gravés dans la masse ou multi couches, chiffrement des données, etc.). Cette sécurisation repose également sur l'utilisation, au niveau du processeur sécurisé, d'un système d'exploitation sécurisé, dans le sens où il dispose d'un ensemble de moyens (de contrôle, de restriction d'accès, cryptographiques, etc.) censé le rendre moins vulnérable et le protéger efficacement face aux différents type d'attaques qu'il pourrait subir. A l'inverse, le système d'exploitation mis en oeuvre au sein du processeur non sécurisé du dispositif électronique de saisie de données est un système qui peut être qualifié de «système ouvert », dans le sens où suffisamment d'accès à ce système sont largement diffusés, ce qui favorise le développement de nombreuses applications. La notion de système d'exploitation ouvert englobe donc non seulement les systèmes d'exploitation réellement ouverts tels que le sont les systèmes UNIX et LINUX d'origine, mais également les systèmes à large diffusion commerciale tels que le sont par exemple les différentes versions de Microsoft Windows™. L'intérêt de tels dispositifs - qui comprennent à la fois un processeur sécurisé et un processeur non sécurisé - réside dans leur capacité à pouvoir mettre en oeuvre non seulement des applications sécurisées, en ce sens qu'elles ont le plus souvent été certifiées par un organisme de confiance et qu'elles sont autorisées à être exécutée par le processeur sécurisé, mais également des applications tierces, non nécessairement certifiées. Ces applications tierces, exécutées par le processeur non sécurisé, permettent d'enrichir l'expérience utilisateur et permettent d'ouvrir le dispositif à de nouvelles fonctionnalités. On présente, en relation avec la **figure 1****,** un dispositif électronique de saisie de données (10) de ce type, tel qu'existant dans l'art antérieur. Un tel dispositif (10) comprend le plus souvent un écran (11) permettant d'afficher l'interface graphique d'une application courante exécutée au sein du dispositif, et un clavier (12) permettant à un utilisateur d'interagir avec ladite application. Le clavier (12) comprend traditionnellement plusieurs ensembles de touches. Un premier ensemble, appelé ici ensemble des touches de saisie (13), regroupe les touches qui permettent à un utilisateur de saisir de l'information sur le dispositif. Ces touches sont généralement associées à un ou plusieurs caractères alphanumériques ou de ponctuation. Par des appuis successifs sur ces touches de saisie, un utilisateur a ainsi la possibilité de former une séquence de caractères, représentative par exemple du montant d'une transaction financière ou d'un code confidentiel associé à une carte de paiement. Un deuxième ensemble de touches, appelé ici ensemble des touches de commande (14), regroupe les touches qui permettent à un utilisateur d'agir sur une séquence de caractères préalablement saisie au moyen des touches de saisie (13). On y trouve les touches permettant de valider (V), corriger (C), ou annuler (X) une séquence de caractères préalablement saisie. D'autres touches, qui ne sont ni des touches de saisie ni des touches de commande et qui sont regroupées ici sous le terme générique d'ensemble de touches annexes (15), peuvent enfin compléter le clavier (12). Il peut s'agir par exemple de touches de navigation, de fonction, de raccourci, etc.

Dans un tel dispositif électronique de saisie de données (10), les applications sécurisées sont mises en oeuvre par un processeur sécurisé (PS), tandis que les applications tierces, non sécurisées sont mise en oeuvre par un processeur non sécurisé (PNS). Le processeur non sécurisé (PNS) est généralement placé sous contrôle du processeur sécurisé (PS), dans une relation de type maître - esclave. En particulier, toute donnée issue ou à destination du processeur non sécurisé transite par le processeur sécurisé. Dans ce cadre, le processeur sécurisé est notamment capable d'intercepter toute donnée saisie par un utilisateur sur le clavier (12) dudit dispositif, même si la saisie de ces données a été demandée par une application tierce exécutée par le processeur non sécurisé (PNS). Par ailleurs, lorsqu'un tel dispositif électronique de saisie de données (10) est utilisé pour la réalisation d'une transaction sécurisée impliquant la saisie de données confidentielles (par exemple une opération de paiement), les moyens d'interactions du dispositif avec un utilisateur (tels que l'écran (11), le clavier (12), un lecteur de carte, etc.) passent intégralement sous contrôle du processeur sécurisé (PS). Le processeur non sécurisé (PNS) n'est alors plus autorisé à interagir avec ces éléments, ce qui garantit une sécurisation renforcée de ces opérations sensibles, car seules des applications certifiées exécutées au niveau du processeur sécurisé ont alors la possibilité d'accéder aux données échangées.

Le dispositif présenté en relation avec la figure 1, qui comprend un clavier physique, est donné à titre purement illustratif et non limitatif. En particulier, les considérations précédentes relatives aux différents ensembles de touches présents au sein d'un clavier restent bien entendu valables dans le cas d'un clavier virtuel affiché sur un écran tactile dudit dispositif. Il arrive également que le dispositif électronique de saisie de données ne comprenne qu'un seul processeur principal, apte à jouer successivement le rôle de processeur sécurisé d'une part et de processeur non sécurisé d'autre part. Dans ce cas, l'environnement d'exécution sécurisé prend la forme d'un mode spécifique d'exécution de ce processeur principal du dispositif électronique de saisie de données.

Dans toute la suite du document, on considère, à des fins de simplification, que le dispositif électronique de saisie de données est un terminal de paiement électronique. Cet exemple est donné à titre purement illustratif et non limitatif, et la technique proposée peut être mise en oeuvre au sein d'autres types de dispositif électronique de saisie de données, tels que des smartphones ou des tablettes, sans sortir du cadre de la présente technique.

Dans la plupart des dispositifs électroniques de saisie de données existants, une seule et unique touche de validation est généralement dédiée à la validation de toute opération nécessitant la confirmation d'une saisie préalablement effectuée par un utilisateur. Le clavier d'un terminal de paiement, tel que celui présenté par exemple en figure 1, comprend ainsi classiquement une seule touche de validation (le plus souvent associée à la couleur verte) destinée à confirmer toute saisie d'un utilisateur (dans l'exemple présenté, il s'agit de la touche (V), comprise dans l'ensemble de touches de commande (14)). Quelque soit la nature de l'opération en cours sur le dispositif électronique de saisie de données, cette même touche de validation est utilisée pour confirmer toute séquence de caractères saisie par l'utilisateur. Ainsi, la touche de validation (V) peut par exemple être utilisée dans un premier temps par un commerçant, pour valider le montant à régler par un client suite à un acte d'achat, ce montant ayant été préalablement saisi au moyen des touches de saisie (13). Le commerçant présente ensuite le terminal de paiement (10) au client, qui vérifie le montant affiché sur l'écran (11), saisit le code confidentiel associé à sa carte de paiement préalablement introduite dans le dispositif, et utilise à son tour cette même touche de validation (V) pour confirmer la bonne saisie de son code confidentiel et ainsi déclencher l'opération de paiement.

Avec ces dispositifs électroniques de saisie de données existants, qui n'offrent qu'un seul moyen de valider une séquence de caractères saisie par un utilisateur, la même touche de validation est donc utilisée aussi bien pour valider une opération anodine (par « anodine », on entend une opération non critique, qui ne fait pas intervenir de données sensibles, la saisie d'un montant par exemple) qu'une opération critique (qui porte sur des données sensibles, la saisie d'un code confidentiel par exemple). D'autre part, on peut aussi constater qu'avec les dispositifs existants, cette même touche de validation est également utilisée aussi bien pour valider une opération demandée par une application tierce non sécurisée (exécutée par le processeur non sécurisé), que pour valider une opération demandée par une application sécurisée (exécutée par le processeur sécurisé).

L'inconvénient de cette approche est qu'elle offre à des personnes malveillantes une opportunité de tromper la vigilance des utilisateurs de tels dispositifs électroniques de saisie de données. Les mécanismes de validation étant actuellement similaires, tant au niveau de la nature des opérations (anodine vs. critique) que de leur origine (demandée par une application non sécurisée vs. demandée par une application sécurisée), les techniques d'hameçonnage (ou « phishing » en anglais) - qui consistent à voler les données confidentielles d'un utilisateur au moyen d'une application malveillante imitant une application légitime - peuvent ainsi s'avérer particulièrement efficaces.

La technique décrite ici se propose de remédier au moins en partie à ce problème, d'une part grâce à un dispositif électronique de saisie de données comprenant au moins deux moyens distincts de valider une séquence de caractères saisie, et d'autre part par la mise en oeuvre d'un procédé de sécurisation de la validation de ladite séquence de caractères saisie, procédé qui tient compte du moyen utilisé pour valider ladite saisie.

### 5.2 Dispositif

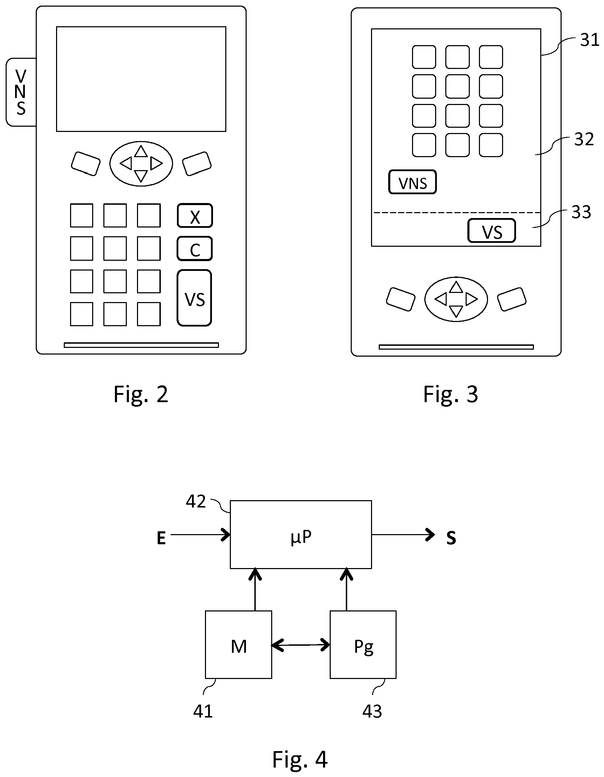

On présente, en relation avec la **figure 2**, un exemple d'un dispositif électronique de saisie de données dans un mode de réalisation particulier de l'invention. Comme déjà décrit dans la présentation du contexte général de l'invention, ce dispositif comprend deux processeurs (non représentés) : un processeur sécurisé pour la mise en oeuvre d'applications sécurisées, et un processeur non sécurisé pour la mise en oeuvre d'application tierces non sécurisées. A la différence d'un dispositif électronique de saisie de données classique, tel que celui déjà présenté en relation avec la figure 1, le dispositif décrit ici comprend un ensemble comprenant au moins deux moyens de validation distincts aptes à être utilisés pour valider une séquence de caractères préalablement saisie : un moyen de validation dit sécurisé (VS) et un moyen de validation dit non sécurisé (VNS). Dans l'exemple de la figure 2, ces moyens de validation sont des boutons physiques. Afin de ne pas perturber les utilisateurs habitués à utiliser un dispositif électronique de saisie de données classique, le bouton de validation sécurisé (VS) est idéalement placé au même endroit que celui traditionnellement occupé par le bouton de validation unique d'un dispositif équivalent de l'art antérieur (il en occupe la même position, sur la face avant, en bas à droite dans l'exemple des figures 1 et 2 : le moyen de validation sécurisé (VS) de la figure 2 est positionné en lieu et place du moyen de validation classique (V) de la figure 1). Ce moyen de validation sécurisé (VS) est placé sous contrôle exclusif du processeur sécurisé, grâce par exemple à un câblage physique dédié. Dans un mode de réalisation particulier du dispositif proposé, le bouton de validation non sécurisée (VNS) est isolé du reste du clavier, de sorte qu'il soit relativement éloigné du bouton de validation sécurisée (VS). Le bouton de validation non sécurisée (VNS) est par exemple positionné sur une face du dispositif qui est différente de celle qui accueille le reste du clavier. Si le reste du clavier est intégré, comme c'est généralement le cas, sur la face avant du dispositif électronique de saisie de données, le bouton de validation non sécurisée (VNS) est par exemple positionné sur la tranche du dispositif la plus éloignée possible du bouton de validation sécurisée, ou encore sur la face arrière. De cette manière, l'accès à ce bouton de validation non sécurisée est rendu plus difficile, et sa position et son utilisation apparaissent comme inhabituelles pour un utilisateur (par exemple un client).

Dans le cas où l'essentiel du clavier du dispositif électronique de saisie de données n'est pas constitué par un clavier physique mais par un clavier virtuel affiché sur un écran tactile, le même principe général qui consiste à offrir deux moyens distincts de validation - une validation sécurisée placée sous contrôle du processeur sécurisé et une validation non sécurisée - est également appliqué. On présente, en relation avec la **figure 3**, un autre mode de réalisation particulier d'un tel dispositif, qui comprend un écran tactile (31) apte à afficher, entre autres éléments graphiques, un clavier virtuel. Cet écran tactile (31) est divisé en au moins deux zones : une zone dite non sécurisée (32) et une zone dite sécurisée (33). La zone non sécurisée (32) définit une partie de l'écran tactile au sein de laquelle toute application - qu'elle soit exécutée par le processeur sécurisé ou par le processeur non sécurisé - est en mesure d'afficher des données et de recueillir des signaux de pressions sur un endroit de ladite zone. La zone sécurisée (33) est quant à elle placée sous le contrôle exclusif du processeur sécurisé : seule une application sécurisée exécutée par le processeur sécurisé est en mesure d'y afficher ou d'y recueillir de l'information. C'est dans cette zone qu'est affichée le moyen de validation sécurisé (VS), qui se trouve ainsi également sous contrôle exclusif du processeur sécurisé. D'autres boutons tactiles de commande (non représentés), tels qu'un bouton de correction ou un bouton d'annulation de la saisie, peuvent également être affichés dans cette zone sécurisée, sur laquelle le processeur non sécurisé n'a aucune prise : il n'a pas accès à cette zone, que ce soit pour y afficher des éléments ou pour intercepter des évènements (des appuis réalisés par un utilisateur) qui s'y produiraient. Le moyen de validation non sécurisée (VNS) est pour sa part affiché dans la zone non sécurisée (32) de l'écran tactile, éventuellement sous contrôle d'une application non sécurisée.

Les deux modes de réalisation particuliers du dispositif électronique de saisie de données présentés en figures 2 et 3 sont données à titre purement illustratifs et non limitatifs. D'autres combinaisons sont possibles, tant que le moyen de validation sécurisé (VS) reste placé sous contrôle exclusif du processeur sécurisé.

Outre l'ensemble comprenant au moins les deux moyens de validation distincts que sont les moyens de validation sécurisé (VS) et non sécurisé (VNS), le dispositif électronique de saisie de données comprend également des moyens de détermination d'un traitement à appliquer à la séquence de caractères saisie, en fonction d'un signal représentatif du moyen de validation utilisé par l'utilisateur pour valider ladite séquence de caractères. Ce signal représentatif d'une validation est délivré par un des moyens de validation appartenant à l'ensemble comprenant au moins deux moyens de validation distincts. En d'autres termes, il est délivré suite à un appui, par l'utilisateur, sur un des boutons (tactiles ou physiques) qui constituent les moyens de validation sécurisé (VS) et non sécurisé (VNS).

Ces moyens de détermination d'un traitement à appliquer sont mis en oeuvre par un processeur sécurisé, au niveau d'un environnement d'exécution sécurisé tel que celui présenté en relation avec la **figure 4****.**

Par exemple, l'environnement d'exécution sécurisé comprend une mémoire sécurisée (41) constituée d'une mémoire tampon, une unité de traitement (42), équipée par exemple du processeur sécurisé, et pilotée par le programme d'ordinateur sécurisé (43), mettant en oeuvre les étapes nécessaires à la sécurisation d'une validation d'une séquence de caractères selon la technique proposée.

À l'initialisation, les instructions de code du programme d'ordinateur (43) sont par exemple chargées dans une mémoire avant d'être exécutées par le processeur sécurisé de l'unité de traitement (42). L'unité de traitement (42) reçoit en entrée (E) par exemple un signal représentatif d'une validation, suite à l'utilisation, par l'utilisateur du dispositif électronique de saisie de données, d'un des moyens de validation appartenant à l'ensemble comprenant au moins deux moyens de validation distincts. Le processeur sécurisé de l'unité de traitement (42) met alors en oeuvre les étapes d'un procédé de sécurisation de la validation de la séquence de caractères préalablement saisie par l'utilisateur, selon les instructions du programme d'ordinateur (43), et détermine en sortie (S) le traitement à appliquer à ladite séquence de caractères, en fonction du signal représentatif d'une validation.

Pour cela, l'environnement d'exécution sécurisé comprend, outre la mémoire sécurisée (41), des moyens de transmission/réception de données, qui permettent d'une part l'échange de données en provenance d'un dispositif de saisie (par exemple un clavier) et à destination d'un dispositif de restitution (par exemple un écran) du dispositif électronique de saisie de données, et d'autre part l'échange de données avec un processeur non sécurisé du dispositif électronique de saisie de données. Ainsi, l'environnement d'exécution sécurisé est notamment apte à intercepter les données en provenance ou à destination d'une application exécutée sur le processeur non sécurisé du dispositif électronique de saisie de données. Ces moyens de transmission/réception de données peuvent se matérialiser sous la forme d'interfaces de connexion logicielles ou d'interfaces matérielles. Selon la technique proposée, un tel environnement d'exécution sécurisé comprend en outre des moyens de stockage qui peuvent prendre la forme d'une base de données ou d'un ensemble de fichiers de configuration, ou un accès à de tels moyens de stockage. Ces moyens de stockage peuvent notamment héberger une liste d'applications prédéterminée, qui recense les applications au sein desquelles l'utilisation d'un moyen de validation sécurisé est considérée comme légitime. Parmi ces applications, on peut citer à titre d'exemple les applications sécurisées ou certifiées, généralement exécutées par le processeur sécurisé, qui font intervenir ou requiert la saisie de données confidentielles, par exemple une application de paiement. Cette liste n'est cependant pas limitée à ce type d'applications, et elle peut également comprendre des applications exécutées par le processeur non sécurisé, mais qui sont par exemple bien connues et largement répandues (comme les applications de caisse) et pour lesquelles imposer l'utilisation du moyen de validation non sécurisé, de par sa position inhabituelle, apparaîtrait comme contre-productif ou trop perturbant pour un utilisateur. Cette liste d'applications est par exemple mise à jour par le constructeur du dispositif électronique de saisie de données.

### 5.3 Procédé

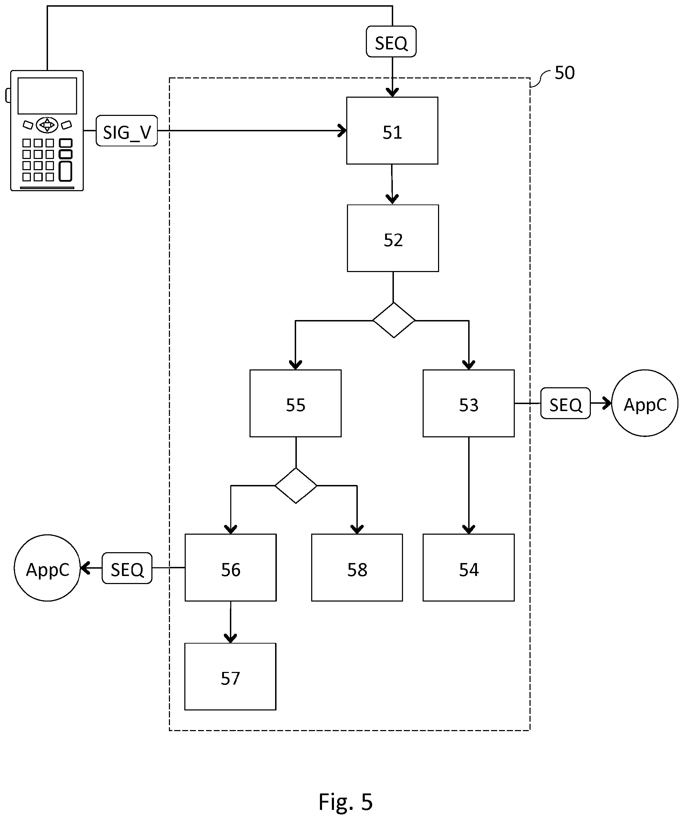

On décrit maintenant, en relation avec la **figure 5**, les étapes mises en oeuvre au niveau du processeur sécurisé d'un dispositif électronique de saisie de données, pour la réalisation du procédé de sécurisation d'une validation d'une séquence de caractères, selon un mode de réalisation particulier de la technique proposée. Le dispositif électronique de saisie de données considéré comprend au moins deux moyens de validation d'une séquence de caractères saisie, comme exposé préalablement : un moyen de validation sécurisée (VS) placé sous contrôle exclusif du processeur sécurisé, et un moyen de validation non sécurisé. Dans le mode de réalisation particulier présenté en relation avec la figure 5, une application courante (AppC), sécurisée ou non, est en cours d'exécution et relaie des informations à destination d'un utilisateur au moyen par exemple d'une interface graphique affichée sur l'écran du dispositif électronique de saisie de données. L'application courante (AppC) peut notamment inviter l'utilisateur à saisir des informations dans le but de poursuivre une transaction.

Au cours d'une étape d'interception 51, le processeur sécurisé intercepte les saisies effectuées par un utilisateur sur le clavier (physique ou tactile) du dispositif électronique de saisie de données, jusqu'à obtention d'un signal (SIG_V) représentatif d'une validation de ladite saisie. Ainsi, à chaque appui de l'utilisateur sur une touche de saisie dudit clavier et tant qu'un signal représentatif d'une validation n'est pas obtenu, le caractère associé est intercepté et stocké dans une mémoire sécurisée associée au processeur sécurisé. L'ensemble des caractères saisis forme alors une séquence de caractères (SEQ) enregistrée dans la mémoire sécurisée associée au processeur sécurisé. Dans le mode de réalisation proposée en relation avec la figure 5, l'interception des caractères saisis et le stockage, dans ladite mémoire, de la séquence de caractères (SEQ) résultante, perdurent tant que le signal de validation (SIG_V) n'est pas obtenu. Ce signal de validation (SIG_V) est obtenu lorsque l'utilisateur a terminé la saisie d'une séquence de caractères souhaitée et qu'il la valide au moyen d'un des deux moyens de validation (non sécurisée ou sécurisée) mis à sa disposition au sein du dispositif électronique de saisie de données. Selon le moyen utilisé par l'utilisateur pour valider sa séquence de caractères, le signal obtenu est représentatif ou bien d'une validation non sécurisée, ou bien d'une validation sécurisée (cette information est par exemple obtenue en déterminant quelle est la touche de validation physique qui a été pressée, ou, dans le cas d'un clavier tactile, en détectant les coordonnées de la zone d'appui et en en déduisant la nature du bouton de validation tactile associé).

Une fois le signal (SIG_V) reçu, le processeur sécurisé récupère, dans la mémoire sécurisée associée, la séquence de caractères (SEQ), au cours d'une étape d'obtention 52 de ladite séquence de caractères.

Lorsque le signal obtenu au cours de l'étape d'interception 51 est représentatif d'une validation non sécurisée, la séquence de caractères (SEQ) obtenue au cours de l'étape d'obtention 52 est transmise, (étape de transmission 53), à l'application courante (AppC) à l'origine de cette demande de saisie d'information. Il peut notamment s'agir d'une application tierce exécutée sur le processeur non sécurisé. Dans ce cas, il n'y a pour ainsi dire aucun contrôle, de la part du processeur sécurisé, de la légitimité qu'a ou non l'application courante de requérir des informations de la part d'un utilisateur. Il est considéré que l'utilisateur sait ce qu'il fait, dans la mesure ou il utilise notamment un moyen de validation particulier - le bouton de validation non sécurisée - préférentiellement situé dans une position moins facile d'accès que le reste du clavier (dans le cas contraire où une application malveillante se ferait passer pour une application légitime et insisterait pour qu'un utilisateur non averti valide des données confidentielles au moyen de ce bouton de validation non sécurisée, la position particulière et inhabituelle de ce dernier a idéalement pour effet d'éveiller les soupçons de cet utilisateur).

Lorsque cette transmission est effectuée, la séquence de caractères (SEQ) peut alors être supprimée (étape de suppression 54) de la mémoire sécurisée associée au processeur sécurisé.

Lorsque le signal obtenu au cours de l'étape d'interception 51 est représentatif d'une validation sécurisée, le processeur sécurisé met en oeuvre une étape de comparaison (55) de l'application courante (AppC) avec une liste d'applications prédéterminée, afin de déterminer le traitement à appliquer à la séquence de caractères (SEQ) obtenue (au cours de l'étape d'obtention 52). L'application courante considérée est celle qui est active au moment de l'appui sur le bouton de validation sécurisée (c'est à dire, par exemple, l'application à laquelle est associée l'interface graphique affichée sur l'écran du dispositif électronique de saisie de données, au moment de la validation). La comparaison de l'application courante avec la liste d'applications prédéterminée peut être effectuée sur la base de différents critères, par exemple un nom ou un identifiant d'application. Elle peut également être mise en oeuvre sur la base de marqueurs informatiques (ou drapeaux, « flag » en anglais) spécifiques et sécurisés, que seul le processeur sécurisé est apte à mettre en oeuvre pour « marquer » certaines applications particulières, en particulier les applications faisant intervenir des données sensibles. L'absence de tels marqueurs définit également en soi une nature d'application courante : dans ce cas de figure, on a ainsi normalement affaire à une application en lien avec des données de nature non critique, pour laquelle l'usage d'une validation sécurisée n'a normalement pas de sens. La liste d'applications prédéterminée recense quant à elle les applications au sein desquelles l'utilisation d'un moyen de validation sécurisé est considérée comme légitime (ce sont en général, mais ce n'est pas forcément toujours le cas, des applications pour lesquelles il apparaît légitime que le traitement des données afférentes reste dans le périmètre exclusif du processeur sécurisé). Il s'agit notamment des applications faisant intervenir des données confidentielles, telles que des transactions de paiement impliquant la saisie de données bancaires, d'un code confidentiel associé à une carte de paiement ou de crédit, d'informations sensibles d'ordre médical ou civil, qui portent sur des données biologiques ou patrimoniales propres à un individu, etc.

Dans le cas où l'application courante (AppC) est présente dans la liste d'applications prédéterminée, la séquence de caractères (SEQ) obtenue est transmise, au cours d'une étape de transmission 56, à l'application courante (AppC) à l'origine de cette demande de saisie d'information. Ce cas de figure correspond au cas nominal où il apparait légitime que l'utilisateur se serve du bouton de validation sécurisée pour confirmer une saisie préalablement effectuée, au regard de l'application courante en cours d'exécution. La séquence de caractères (SEQ) saisie forme alors en tout état de cause une donnée confidentielle ou sensible, dont il est souhaitable qu'elle soit gérée exclusivement au niveau du processeur sécurisé du dispositif électronique de saisie de données. Une fois cette transmission de la séquence de caractères (SEQ) à l'application courante (AppC) effectuée, le la séquence de caractères (SEQ) peut être supprimée de la mémoire sécurisée associée au processeur sécurisé (étape de suppression 57).

Dans le cas contraire où l'application courante (AppC) est absente de la liste d'applications prédéterminée, la séquence de caractères (SEQ) est supprimée de la mémoire sécurisée associée au processeur sécurisé (étape de suppression 58). Elle n'est alors pas transmise à l'application courante (AppC). En effet, le processeur sécurisé a alors détecté une validation sécurisée en association avec une application courante qui ne devrait en tout état de cause pas requérir un tel type de validation. Ce cas de figure peut correspondre à une erreur de manipulation de la part de l'utilisateur (qui a utilisé le bouton de validation sécurisée au lieu d'utiliser le bouton de validation non sécurisée), ou encore à une tentative de fraude : il convient donc de ne pas transmettre la séquence de caractères (SEQ) saisie à l'application courante (AppC), et celle-ci est purement et simplement supprimée. Dans un mode de réalisation particulier de la technique proposée, une donnée représentative de la suppression sans transmission de ladite séquence de caractères (par exemple un message d'avertissement) peut alors être affiché sur l'écran du dispositif électronique de saisie de données, afin de prévenir l'utilisateur que sa saisie n'a pas été traitée en en expliquer les raisons.

Dans un mode de réalisation particulier de la technique proposée, la liste d'application prédéterminée contient uniquement des applications susceptibles d'être exécutées par le processeur sécurisé du dispositif électronique de saisie de données. De cette manière, dès lors que le signal obtenu est représentatif d'une validation sécurisée, la séquence de caractères (SEQ) n'est jamais transmise au processeur non sécurisé et reste dans le giron exclusif du processeur sécurisé.

Le procédé précédemment décrit est mis en oeuvre au niveau du processeur sécurisé du dispositif électronique de saisie de données, par exemple au moyen d'une application ou d'un processus sécurisé dédié (différent de l'application courante (AppC)) exécuté au sein de ce processeur sécurisé, ledit application ou processus sécurisé dédié étant constamment « à l'écoute », en tache de fond. Dès lors que la validation d'une première séquence de caractères préalablement saisie est détectée, le procédé peut être mené à son terme et aboutir selon les cas à la transmission ou à la suppression de ladite première séquence de caractères. Il est alors immédiatement mis en oeuvre à nouveau, afin de sécuriser la validation de la séquence de caractères saisie suivante.

Dans un mode de réalisation particulier de la technique proposée, le processeur sécurisé envoie à l'application courante (AppC) un signal représentatif d'un appui sur une touche de saisie, à chaque fois que l'utilisateur saisit un caractère au moyen d'une touche de saisie du dispositif électronique de saisie de données. Ce signal ne contient aucune information de nature à permettre l'identification du caractère saisi. Ainsi, ce signal permet de notifier l'application courante (AppC) qu'un caractère est saisi, sans toutefois lui permettre d'identifier ce caractère. De cette manière, l'application courante (AppC) est en mesure d'afficher un retour visuel à l'utilisateur au fur et à mesure de sa frappe, avant qu'une validation ne soit effectuée. L'application courante peut par exemple faire afficher un astérisque sur un écran du dispositif électronique de saisie de données, à chaque fois qu'un utilisateur saisit un caractère. Cet utilisateur est ainsi informé en temps-réel de la prise en compte de sa saisie. Ce mécanisme permet également à l'application courante (AppC) de comptabiliser le nombre de caractères déjà saisi par un utilisateur, afin de vérifier qu'un nombre de caractères attendus est bien atteint par exemple.

Dans un autre mode de réalisation particulier de la technique proposée, la séquence de caractères courante enregistrée, au fur et à mesure de la frappe de l'utilisateur, dans la mémoire sécurisée associée au processeur sécurisé, est supprimée de ladite mémoire si aucune saisie de caractère ou aucune validation n'est effectuée par l'utilisateur sur le dispositif électronique de saisie de données pendant un temps prédéterminé. En d'autres termes, si le processeur sécurisé ne détecte ni nouvelle saisie de caractère, ni validation pendant un temps prédéterminé (par exemple une dizaine de seconde ou une minute), il supprime la séquence de caractères actuellement en attente en mémoire sécurisée.

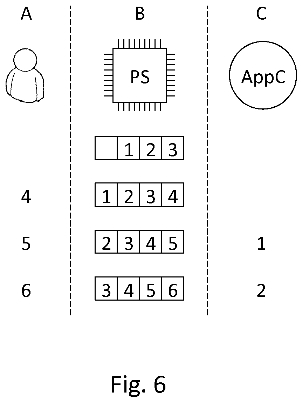

Selon encore un mode de réalisation particulier de la technique proposée, le nombre de caractères de la séquence de caractères que le processeur sécurisé est apte à conserver en mémoire sécurisée est limité et prédéterminé. Imposer ainsi une longueur maximale prédéfinie à la séquence de caractères qui est conservée en mémoire sécurisée présente plusieurs avantages. En premier lieu, cela permet à l'application courante (AppC) d'obtenir, sous certaines conditions, un retour suite aux saisies de caractères effectuées par un utilisateur, sans avoir à attendre nécessairement une action de validation de la séquence de caractères saisie, et ceci sans sacrifier pour autant la sécurisation d'éventuelles données confidentielles saisies. Si on considère par exemple un terminal de paiement dont la fonctionnalité première est de permettre la réalisation d'opérations de paiement au moyen de cartes de paiement classiques, lesquelles sont associées à des codes confidentiels à quatre chiffres, la longueur maximale de la séquence de caractères mémorisée dans le cadre du procédé proposé peut être fixée à quatre caractères (car protéger les quatre derniers caractères saisis avant une validation est alors a priori suffisant pour protéger un code confidentiel à quatre chiffres - il va de soi que cette longueur maximale de quatre caractères est donnée ici à titre purement illustratif, et que cette longueur peut être fixée à d'autres valeurs dans d'autres situations). On présente, en relation avec la **figure 6**, un exemple de l'évolution d'une telle séquence limitée à quatre caractères et conservée dans la mémoire sécurisée associée au processeur sécurisé d'un dispositif électronique de saisie de données (colonne B), consécutivement à différentes saisie de caractères effectuées par un utilisateur sur ce dispositif (colonne A). Les caractères transmis à l'application courante (AppC) (qui est par exemple exécutée au niveau du processeur non sécurisé) sont indiqués en colonne C. On considère dans cet exemple que l'utilisateur a déjà saisi la séquence de caractères « 123 », puis qu'il presse successivement les touches associées aux caractères « 4 », « 5 » et « 6 » dans cet ordre. Dès lors que la taille maximale prédéfinie de la séquence de caractères enregistrée selon le procédé proposé est atteinte, toute nouvelle saisie de caractère entraine d'une part une actualisation de la séquence de caractères mémorisée aux quatre derniers caractères saisie, et d'autre part la transmission immédiate du caractère « libéré » à l'application courante (AppC) (selon le principe bien connu en informatique du « premier entré, premier sorti », ou FIFO en anglais pour « First In, First Out »). Ainsi, si on s'intéresse à la dernière ligne de la figure 6, un appui de l'utilisateur sur la touche « 6 » déclenche une mise à jour de la séquence de caractères retenue au niveau de la mémoire sécurisée associée au processeur sécurisé (passage de la valeur « 2345 » à la valeur « 3456 »), et la fin de rétention du caractère « 2 » qui est alors directement transmis à l'application courante (AppC). De cette manière, tant qu'une validation d'une séquence de caractères saisie n'est pas détectée par le processeur sécurisé, seul les quatre derniers caractères saisis sont retenus dans la mémoire sécurisée associée au processeur sécurisé. Plutôt que de priver une application tierce courante (AppC) de tout retour suite aux saisies effectuées au clavier tant qu'un des boutons de validation n'a pas été pressé (rétention, par le processeur sécurisé, de l'ensemble de la séquence de caractères saisie tant qu'elle n'est pas validée), ce mode de réalisation permet donc de lui transmettre, au fur et à mesure de la frappe, les caractères qui ne font pas partie des quatre derniers caractères saisis (rétention, par le processeur sécurisé, d'un nombre fini de caractères saisis uniquement). Imposer une longueur maximale prédéfinie à la séquence de caractères qui est conservée en mémoire sécurisée permet également de se prémunir de potentielles attaques, qui viserait par exemple à compromettre le processeur sécurisé en saturant la mémoire sécurisée qui lui est associé, par la saisie d'une chaîne de caractères de longueur très importante sans jamais opérer de validation.

Il convient de noter que, dans d'autres modes de réalisation particuliers de la technique proposée, des boutons de commande autres que les boutons de validation sécurisée et non sécurisée sont susceptibles d'impacter la séquence de caractères enregistrée dans la mémoire sécurisée associée au processeur sécurisé. Ainsi, les effets des boutons permettant de corriger ou annuler une saisie effectuée sur un dispositif électronique de saisie de données (les boutons respectifs (C) et (X) de la figure 2 par exemple) s'appliquent également à la séquence de caractères enregistrée dans la mémoire sécurisée associée au processeur sécurisé. Le bouton de correction permet ainsi d'effacer le dernier caractère de cette séquence de caractères. Le bouton d'annulation permet quant à lui de supprimer purement et simplement ladite séquence de caractères de la mémoire sécurisée associée au processeur sécurisé.

## Revendications

1. Procédé de sécurisation d'une validation d'une séquence de caractères (SEQ) saisie par un utilisateur sur un dispositif électronique de saisie de données comprenant un processeur non sécurisé et un processeur sécurisé, ledit processeur non sécurisé étant placé sous contrôle dudit processeur sécurisé, ladite saisie étant réalisée en relation avec une application courante exécutée par l'un desdits processeurs, ledit procédé étant **caractérisé en ce qu'**il comprend au niveau dudit processeur sécurisé :
- une étape d'obtention d'un signal (SIG_V) représentatif d'un moyen de validation, utilisé par ledit utilisateur pour valider ladite séquence de caractères (SEQ), ledit signal (SIG_V) étant délivré par un moyen de validation appartenant à un ensemble comprenant au moins deux moyens de validation distincts ;
- une étape d'obtention, au sein d'une mémoire sécurisée associée audit processeur sécurisé, de ladite séquence de caractères ;
- lorsque le signal est représentatif d'une validation sécurisée, une étape de comparaison de ladite application courante avec une liste d'applications prédéterminée ;
- lorsque ladite application courante est présente dans la liste d'applications prédéterminée :
- une étape de transmission de ladite séquence de caractères vers ladite application courante ;
- une étape de suppression, de ladite mémoire sécurisée, de ladite séquence de caractères ;
- lorsque ladite application courante est absente de la liste d'applications prédéterminée, une étape de suppression, de ladite mémoire sécurisée, de ladite séquence de caractères.

2. Procédé de sécurisation selon la revendication 1 **caractérisé en ce qu'**il comprend en outre :
- lorsque ledit signal est représentatif d'une validation non sécurisée :
- une étape de transmission de ladite séquence de caractères vers ladite application courante ;
- une étape de suppression, de ladite mémoire sécurisée, de ladite séquence de caractères.

3. Procédé de sécurisation selon l'une quelconque des revendications 1 à 2 **caractérisé en ce qu'**il comprend en outre, lorsque l'application courante est absente de la liste d'applications prédéterminée, une étape d'affichage, sur un écran dudit dispositif électronique de saisie de données, d'une donnée représentative de la suppression sans transmission de ladite séquence de caractères.

4. Procédé de sécurisation selon l'une quelconque des revendications 1 à 3 **caractérisé en ce que** la longueur de ladite séquence de caractères, obtenue au sein de ladite mémoire sécurisée, est prédéfinie.

5. Procédé de sécurisation selon l'une quelconque des revendications 1 à 4 **caractérisé en ce que** ladite séquence de caractères est supprimée de ladite mémoire sécurisée si aucune saisie de caractère n'est effectuée sur ledit dispositif électronique de saisie de données pendant un temps prédéterminé.

6. Procédé de sécurisation selon l'une quelconque des revendications 1 à 5 **caractérisé en ce que** ledit dispositif électronique de saisie de données est un terminal de paiement.

7. Dispositif électronique de saisie de données comprenant un processeur non sécurisé et un processeur sécurisé, ledit processeur non sécurisé étant placé sous contrôle dudit processeur sécurisé, ladite saisie étant réalisée en relation avec une application courante exécutée par l'un desdits processeurs, ledit dispositif électronique de saisie de données étant **caractérisé en ce qu'**il comprend :
- un ensemble comprenant au moins deux moyens de validation distincts ;
- des moyens de détermination, par ledit processeur sécurisé, d'un traitement à appliquer à ladite séquence de caractères, en fonction d'un signal représentatif d'un moyen de validation, utilisé par ledit utilisateur pour valider ladite séquence de caractères, ledit signal représentatif d'une validation étant délivré par un des moyens de validation appartenant audit ensemble comprenant au moins deux moyens de validation distincts.
- des moyens d'obtention, par ledit processeur sécurisé, d'un signal représentatif d'un moyen de validation, utilisé par ledit utilisateur pour valider ladite séquence de caractères (SEQ), ledit signal étant délivré par un des moyens de validation appartenant audit ensemble comprenant au moins deux moyens de validation distincts ;
- des moyens d'obtention, par ledit processeur sécurisé, au sein d'une mémoire sécurisée associée audit processeur sécurisé, de ladite séquence de caractères ;
- des moyens de comparaison, par ledit processeur sécurisé, de ladite application courante avec une liste d'applications prédéterminée, mis en oeuvre lorsque le signal est représentatif d'une validation sécurisée ;
- des moyens de transmission, par ledit processeur sécurisé, de ladite séquence de caractères vers ladite application courante, mis en oeuvre lorsque ladite application courante est présente dans la liste d'applications prédéterminée ;
- des moyens de suppression, par ledit processeur sécurisé, de ladite mémoire sécurisée, de ladite séquence de caractères.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de sécurisation selon l'une quelconque des revendications 1 à 6, lorsqu'il est exécuté sur un ordinateur.

## Patentansprüche

1. Verfahren zur Sicherung einer Validierung einer Zeichenfolge (SEQ), die von einem Benutzer in eine elektronische Dateneingabevorrichtung eingegeben wird, umfassend einen nicht gesicherten Prozessor und einen gesicherten Prozessor, wobei die Eingabe in Verbindung mit einer laufenden Anwendung, die von einem der Prozessoren ausgeführt wird, erfolgt, wobei das Verfahren **dadurch gekennzeichnet ist, dass** es im Bereich des gesicherten Prozessors umfasst:
- einen Schritt des Erhalts eines Signals (SIG_V), das für ein Validierungsmittel repräsentativ ist, das von dem Benutzer verwendet wird, um die Zeichenfolge (SEQ) zu validieren, wobei das Signal (SIG_V) von einem Validierungsmittel geliefert wird, das einer Gesamtheit angehört, die mindestens zwei getrennte Validierungsmittel umfasst;
- einen Schritt des Erhalts der Zeichenfolge innerhalb eines gesicherten Speichers, der dem gesicherten Prozessor zugeordnet ist;
- wenn das Signal für eine gesicherte Validierung repräsentativ ist, einen Schritt des Vergleichs der laufenden Anwendung mit einer vorbestimmten Liste von Anwendungen;
- wenn die laufende Anwendung in der vorbestimmten Liste von Anwendungen vorhanden ist:
- einen Schritt der Übertragung der Zeichenfolge zu der laufenden Anwendung;
- einen Schritt des Löschens der Zeichenfolge aus dem gesicherten Speicher;
- wenn die laufende Anwendung in der vorbestimmten Liste von Anwendungen fehlt, einen schritt des Löschens der Zeichenfolge aus dem gesicherten Speicher.

2. Sicherungsverfahren nach Anspruch 1, **dadurch gekennzeichnet, dass** es ferner umfasst:
- wenn das Signal für eine nicht gesicherte Validierung repräsentativ ist:
- einen Schritt der Übertragung der Zeichenfolge zu der laufenden Anwendung;
- einen Schritt des Löschens der Zeichenfolge aus dem gesicherten Speicher.

3. Sicherungsverfahren nach einem der Ansprüche 1 bis 2, **dadurch gekennzeichnet, dass** es ferner, wenn die laufende Anwendung in der vorbestimmten Liste von Anwendungen fehlt, einen Schritt des Anzeigens eines Datums, das für das Löschen der Zeichenfolge ohne Übertragung repräsentativ ist, auf einem Bildschirm der Vorrichtung zur elektronischen Dateneingabe umfasst.

4. Sicherungsverfahren nach einem der Ansprüche 1 bis 3, **dadurch gekennzeichnet, dass** die Länge der Zeichenfolge, die in dem gesicherten Speicher erhalten wird, vordefiniert ist.

5. Sicherungsverfahren nach einem der Ansprüche 1 bis 4, **dadurch gekennzeichnet, dass** die Zeichenfolge aus dem gesicherten Speicher gelöscht wird, wenn keine Zeicheneingabe an der elektronischen Dateneingabevorrichtung während einer vorbestimmten Zeit erfolgt.

6. Sicherungsverfahren nach einem der Ansprüche 1 bis 5, **dadurch gekennzeichnet, dass** die elektronische Dateneingabevorrichtung ein Zahlungsendgerät ist.

7. Elektronische Dateneingabevorrichtung, umfassend einen nicht gesicherten Prozessor und einen gesicherten Prozessor, wobei der nicht gesicherte Prozessor unter Kontrolle des gesicherten Prozessors angeordnet ist, wobei die Eingabe in Verbindung mit einer laufenden Anwendung erfolgt, die von einem der Prozessoren ausgeführt wird, wobei die elektronische Dateneingabevorrichtung **dadurch gekennzeichnet ist, dass** sie umfasst:
- eine Einheit, umfassend mindestens zwei getrennte Validierungsmittel;
- Mittel zur Bestimmung, durch den gesicherten Prozessor, einer an der Zeichenfolge anzuwendenden Bearbeitung in Abhängigkeit von einem Signal, das für ein Validierungsmittel repräsentativ ist, das von dem Benutzer verwendet wird, um die Zeichenfolge zu validieren, wobei das für eine Validierung repräsentative Signal von einem der Validierungsmittel geliefert wird, die der Einheit angehören, umfassend mindestens zwei getrennte Validierungsmittel,
- Mittel zum Erhalt, durch den gesicherten Prozessor, eines Signals, das für ein Validierungsmittel repräsentativ ist, das von dem Benutzer verwendet wird, um die Zeichenfolge (SEQ) zu validieren, wobei das Signal von einem der Validierungsmittel geliefert wird, die der Einheit angehören, umfassend mindestens zwei getrennte Validierungsmittel;
- Mittel zum Erhalt der Zeichenfolge, durch den gesicherten Prozessor, in einem gesicherten Speicher, der dem gesicherten Prozessor zugeordnet ist;
- Mittel zum Vergleich, durch den gesicherten Prozessor, der laufenden Anwendung mit einer vorbestimmten Liste von Anwendungen, die eingesetzt werden, wenn das Signal für eine gesicherte Validierung repräsentativ ist;
- Mittel zur Übertragung, durch den gesicherten Prozessor, der Zeichenfolge zu der laufenden Anwendung, die eingesetzt werden, wenn die laufende Anwendung in der vorbestimmten Liste von Anwendungen vorhanden ist;
- Mittel zum Löschen der Zeichenfolge aus dem gesicherten Speicher durch den gesicherten Prozessor.

8. Computerprogrammprodukt, das von einem Kommunikationsnetzwerk heruntergeladen werden kann und/oder auf einem von einem Computer lesbaren Träger gespeichert ist und/oder von einem Mikroprozessor ausführbar ist, **dadurch gekennzeichnet, dass** es Programmcodeanweisungen für die Ausführung eines Sicherungsverfahrens nach einem der Ansprüche 1 bis 6 umfasst, wenn es von einem Computer ausgeführt wird.

## Claims

1. Method for securing a confirmation of a sequence of characters (SEQ) entered by a user on an electronic data entry device comprising an unsecured processor and a secured processor, said unsecured processor being placed under control of said secured processor, said entry being performed in relation with a current application executed by one of said processors, said method being **characterized in that** it comprises, at said secured processor:
- a step for obtaining a signal (SIG_V) representing a confirmation means, used by said user to confirm said sequence of characters (SEQ), said signal (SIG_V) being delivered by a confirmation means belonging to a set comprising at least two distinct confirmation means ;
- a step for obtaining said sequence of characters within a secured memory associated with said secured processor;
- when the signal represents a secured confirmation, a step for comparing the current application with a list of predetermined applications;
- when said current application is present in the list of predetermined applications:
- a step for transmitting said sequence of characters to said current application;
- a step for eliminating said sequence of characters from said secured memory;
- when said current application is absent from the list of predetermined applications, a step for eliminating said sequence of characters from said secured memory.

2. Method for securing according to claim 1 **characterized in that** it further comprises:
- when said signal represents an unsecured confirmation:
- a step for transmitting said sequence of characters to said current application;
- a step for eliminating said sequence of characters from said secured memory.

3. Method for securing according to any one of the claims 1 to 2 **characterized in that** it further comprises, when said current application is absent from the list of predetermined applications, a step for displaying, on a screen of said electronic data entry device, a piece of data representing the elimination without transmission of said sequence of characters.

4. Method for securing according to any one of the claims 1 to 3 **characterized in that** the length of said sequence of characters obtained within said secured memory is predefined.

5. Method for securing according to any one of the claims 1 to 4 **characterized in that** said sequence of characters is eliminated from said secured memory if no new entry of characters is done on said electronic data entry device for a predetermined period of time.

6. Method for securing according to any one of the claims 1 à 5 **characterized in that** said electronic data entry device is a payment terminal.

7. Electronic data entry device comprising an unsecured processor and a secured processor, said unsecured processor being placed under control of said secured processor, said entry being performed in relation with a current application executed by one of said processors, said electronic data entry device being **characterized in that** it comprises:
- a set comprising at least two distinct confirmation means;
- means for the determining, by said secured processor, of a processing operation to be applied to said sequence of characters, as a function of a signal representing a confirmation means, used by said user to confirm said sequence of characters, said signal representing a confirmation being delivered by one of the confirmation means belonging to said set comprising at least two distinct confirmation means;
- means for obtaining, by said secured processor, a signal representing a confirmation means, used by said user to confirm said sequence of characters (SEQ), said signal being delivered by one of the confirmation means belonging to said set comprising at least two distinct confirmation means;
- means for obtaining, by said secured processor, said sequence of characters within a secured memory associated with said secured processor;
- means for comparing, by said secured processor, said current application with a list of predetermined applications, said means for comparing being implemented when the signal represents a secured confirmation;
- means for transmitting, by said secured processor, said sequence of characters to said current application, said means for transmitting being implemented when said current application is present in the list of predetermined applications;
- means for eliminating, by said secured processor, said sequence of characters from said secured memory.

8. Computer program product downloadable from a communications network and/or stored on a computer-readable carrier and/or executable by a microprocessor, **characterized in that** it comprises program code instructions to execute the method for securing according to any one of the claims 1 to 6, when it is executed on a computer.
